(19) Europäisches Patentamt / European Patent Office / Office européen des brevets

(11) **EP 4 202 091 A1**

(12) **EUROPEAN PATENT APPLICATION**

(43) Date of publication:
**28.06.2023 Bulletin 2023/26**

(21) Application number: **22163453.8**

(22) Date of filing: **22.03.2022**

(51) International Patent Classification (IPC):
**D01F 1/02** (2006.01)   **D01F 1/04** (2006.01)
**D01F 1/10** (2006.01)   **D03D 15/20** (2021.01)
**D03D 15/54** (2021.01)   **D06C 27/00** (2006.01)

(52) Cooperative Patent Classification (CPC):
**D01F 1/10; D01F 1/02; D01F 1/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.12.2021 CN 202111601962**

(71) Applicant: **Taya Canvas (Shanghai) Company Limited**
**Shanghai 201501 (CN)**

(72) Inventor: **LIN, I-Chien**
**Shanghai (CN)**

(74) Representative: **Becker, Eberhard**
**Becker Kurig & Partner**
**Patentanwälte mbB**
**Bavariastraße 7**
**80336 München (DE)**

(54) **FABRIC AND MANUFACTURING METHOD THEREOF**

(57)    The disclosure provides a fabric suitable for an inner light cloth of advertisements. The fabric includes a yarn woven into the fabric with a whiteness of at least greater than 90%, in which the yarn is composed of fibers made from a white masterbatch. A manufacturing method of a fabric suitable for an inner light cloth of advertisements is also provided.

Change in chromatic aberration after UV exposure

EP 4 202 091 A1

**Description**

BACKGROUND

Technical Field

The disclosure relates to a fabric and a manufacturing method thereof, and in particular relates to a fabric suitable for an inner light cloth of advertisements and a manufacturing method thereof.

Description of Related Art

Generally speaking, a light box cloth of advertisements can be divided into an inner light cloth and an outer light cloth, and the requirements for the aforementioned two kinds of cloths are different according to product requirements. For example, for an inner light cloth used in a light box cloth of advertisements, by increasing the amount of light (lighting method), colors printed on the cloth become relatively vivid, thereby improving the viewer's visual experience and achieving the advertising effect. The light transmittance and color presented by the inner light cloth of advertisements depend on the whiteness of a fabric, and that is to say, the higher the whiteness of the fabric, the better the color can be presented on the inner light cloth. Thus, a fabric of an inner light cloth of advertisements is required to have a certain degree of whiteness (degree of white). On the other hand, the awareness of environmental protection is growing in the advertising industry. Therefore, it is a challenge to manufacture a fabric suitable for an inner light cloth of advertisements and having a whiteness that enhances the advertising effect while meeting environmental protection requirements.

SUMMARY

The disclosure is directed to a fabric suitable for an inner light cloth of advertisements and a manufacturing method thereof, in which a whiteness that enhances the advertising effect is achieved while environmental protection requirements are met.

According to an embodiment of the disclosure, a fabric suitable for an inner light cloth of advertisements includes a yarn woven into the fabric with a whiteness of at least greater than 90%, in which the yarn is composed of fibers made from a white masterbatch.

In the fabric according to an embodiment of the disclosure, the white masterbatch includes a carrier resin and a white colorant.

In the fabric according to an embodiment of the disclosure, the carrier resin is not a polyvinyl chloride (PVC) resin.

According to an embodiment of the disclosure, a manufacturing method of a fabric suitable for an inner light cloth of advertisements includes the following. A yarn is provided, in which the yarn is composed of fibers made from a white masterbatch. A yarn dyeing process is carried out on the yarn to weave the fabric with a whiteness of at least greater than 90%.

In the manufacturing method of a fabric according to an embodiment of the disclosure, the whiteness is not obtained through a rinsing process.

In the manufacturing method of a fabric according to an embodiment of the disclosure, a water saving rate of the manufacturing method of a fabric is at least greater than 50% as compared with the rinsing process.

In the manufacturing method of a fabric according to an embodiment of the disclosure, the water saving rate of the manufacturing method of a fabric is greater than 65% as compared with the rinsing process.

In the manufacturing method of a fabric according to an embodiment of the disclosure, one or more chemicals are used in the rinsing process.

In the manufacturing method of a fabric according to an embodiment of the disclosure, the whiteness is not obtained through a calendering process or a coating process.

In the manufacturing method of a fabric according to an embodiment of the disclosure, producing the fibers includes the following. The white masterbatch including a carrier resin and a white colorant is provided. A weaving process, a knitting process, a non-knitting process or a tufting process is carried out.

Based on the above, the fabric of an embodiment of the disclosure includes a yarn woven into a fabric with a whiteness of at least greater than 90%, in which the yarn is composed of fibers made from a white masterbatch Accordingly, the fabric may achieve a whiteness that enhances the advertising effect while meeting environmental protection requirements.

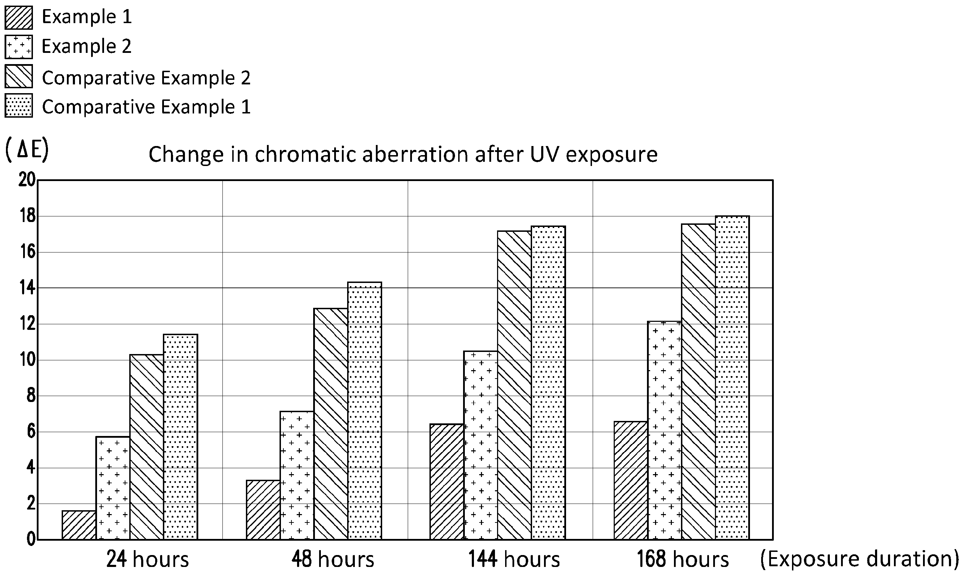

BRIEF DESCRIPTION OF THE DRAWING

The FIGURE is a schematic diagram of a change in chromatic aberration after UV exposure of an example and a comparative example.

DETAILED DESCRIPTION OF DISCLOSED EMBODIMENTS

In order to clearly describe a fabric and a manufacturing method thereof of the disclosure, the disclosure will be described in detail by ways of embodiments.

The FIGURE is a schematic diagram of a change in chromatic aberration after UV exposure of an example and a comparative example.

According to an embodiment of the disclosure, a fabric suitable for an inner light cloth of advertisements includes a yarn woven into fabric with a whiteness of at least greater than 90%, in which the yarn is composed of fibers made from a white masterbatch. According to the aforementioned, the fabric of the embodiment of the disclosure may achieve a whiteness that enhances the advertising effect while meeting environmental protection requirements.

Furthermore, a manufacturing method of a fabric according to an embodiment of the disclosure includes the following. First, a yarn is provided, in which the yarn is composed of fibers made from a white masterbatch. Next, a yarn dyeing process is carried out on the yarn to weave a fabric with a whiteness of at least greater than 90%. That is, in an initial stage in the manufacture of the fabric of an embodiment of the disclosure, color development is performed on the corresponding fibers through addition of the white masterbatch, such that the whiteness of the fibers is increased (to at least greater than 90%). Next, the yarn made from the fibers is woven into the corresponding fabric by the yarn dyeing process. Thus, the fabric woven from the yarn may achieve the whiteness that enhances the advertising effect. In addition, since the whiteness of the fabric of the embodiment of the disclosure is obtained through the yarn dyeing process, rather than a rinsing process, a calendering process or a coating process, the environmental protection requirements can be met. However, the disclosure is not limited thereto.

Furthermore, producing the fibers of an embodiment of the disclosure at least includes the following. First, a white masterbatch including a carrier resin and a white colorant is provided. Next, a weaving process, a knitting process, a non-knitting process or a tufting process is carried out to obtain the aforementioned fibers. Since the aforementioned rinsing process uses, for example, one or more chemicals to achieve the whiteness through multiple treatments such as desizing, washing, bleaching, scouring, and dyeing, the rinsing process consumes a significant amount of energy and chemicals and is not environmental friendly. On the other hand, in the calendering process or coating process, for example, polyvinyl chloride resin is calendered or coated on the fabric to achieve the required whiteness. Since polyvinyl chloride is a "toxic plastic" with poor stability, a corresponding stabilizer is necessary to stabilize the properties of polyvinyl chloride. In addition, all life cycle stages of polyvinyl chloride, from raw material mining, manufacture, use, and to disposal, may cause harm to the environment and human health. Hence, the use of polyvinyl chloride resin may create a very adverse impact on the environment. The carrier resin of an embodiment of the disclosure may not be polyvinyl chloride resin, and the fabric may not have chemical residues. Thus, the fabric of an embodiment of the disclosure does not cause environmental problems such as those caused in a rinsing process, a calendering process, or a coating process, and may avoid the need to perform numerous procedures as in the rinsing process or the like. Therefore, the manufacturing process is simplified, and the manufacturing cost is reduced. However, the disclosure is not limited thereto.

In some embodiments, a water saving rate of the manufacturing method of a fabric of an embodiment of the disclosure is at least greater than 50% as compared with the rinsing process. Furthermore, the water saving rate of the manufacturing method of a fabric of an embodiment of the disclosure may be greater than 65% as compared with the rinsing process.

Hereinafter, the effects of the disclosure will be described in more detail with reference to Examples 1 to 2 and Comparative Examples 1 to 2.

<Example 1>

A fabric (Moonlight River) manufactured by an embodiment (yarn dyeing process) of the disclosure was used.

<Example 2>

An inner light cloth made of the fabric manufactured by Example 1 was used.

<Comparative Example 1>

A fabric (Samba Backlit Textile) manufactured using a rinsing process was used.

<Comparative Example 2>

An inner light cloth made of the fabric manufactured by Comparative Example 1 was used.

It should be noted that the composition and specification of the inner light cloth of which description is omitted herein will be readily understood by persons skilled in the art according to the content within the spirit and scope of the appended claims.

Example 1 and Comparative Example 1 were analyzed using a testing method defined in ISO 14046:2014, and the results are shown in Table 1. A conclusion is as follows. A water saving rate of Example 1 was 67.29% as compared with Comparative Example 1, which means that a good water saving effect can be achieved by using a fabric manufactured by the yarn dyeing process of an embodiment of the disclosure.

<Table 1>

| Fabric | Amount of water used (L) | Amount of water saved (L/m$^2$) | Water saving rate |
|---|---|---|---|
| Example 1 | 39.38 | 81.02 | 67.29% |
| Comparative Example 1 | 120.4 | | |

In some embodiments, a fabric manufactured by the yarn dyeing process of an embodiment of the disclosure may reach a whiteness of 90.7% This whiteness is similar to the whiteness (98.2%) of a fabric manufactured by a rinsing process. A testing method defined in SB/T 10786-2012 is used. However, the disclosure is not limited thereto.

Example 1, Example 2, Comparative Example 1, and Comparative Example 2 were tested by an ultraviolet (UV) exposure method. The results are shown in Table 2, Table 3, and the FIGURE. A conclusion is as follows. After UV exposure, the whiteness obtained through the rinsing process exhibited a greater variation than the whiteness obtained from a masterbatch, and the fabric of Comparative Example 1 and the inner light cloth of Comparative Example 2 respectively exhibited a greater color change than the fabric of Example 1 and the inner light cloth of Example 2 of the disclosure, which means that the color obtained through the rinsing process was more unstable than that obtained from a masterbatch dyeing process. Furthermore, a carrier of a dedicated masterbatch is of the same type of plastic of a product, and a good match is achieved. Pigment particles after heating and melting can be well dispersed in the plastic product. Therefore, the masterbatch has relatively good dispersibility. In the case of directly using a pigment in plastic processing, the pigment may be in direct contact with the air during storage and use and may absorb moisture and oxidize. In the case of a masterbatch, a resin carrier may isolate a pigment from the air and moisture, such that the chemical stability of the pigment can be maintained for a long time. Thus, the stability of chemical pigments and colors can be maintained.

Furthermore, according to the results shown in Table 2 and the FIGURE, after UV exposure, both the fabric of Comparative Example 1 and the inner light cloth of Comparative Example 2 exhibited a greater difference in chromatic aberration than the fabric of Example 1 and Example 2 of the disclosure. Therefore, the rinsing process exhibited less color stability than the masterbatch. The chromatic aberration in Table 1 was calculated by formula (1), in which ΔL=L sample-L standard (lightness aberration), Δa=a sample-a standard (red/green aberration), and Δb=b sample-b standard (yellow/blue aberration).

<Table 2>

| | Example 1 | Example 2 | Comparative Example 2 | Comparative Example 1 |
|---|---|---|---|---|
| | ΔE | ΔE | ΔE | ΔE |
| 24 hours | 1.56 | 5.74 | 10.33 | 11.42 |
| 48 hours | 3.32 | 7.16 | 12.91 | 14.36 |
| 144 hours | 6.44 | 10.53 | 17.28 | 17.55 |
| 168 hours | 6.57 | 12.2 | 17.69 | 17.94 |

<Formula (1)>

$$\Delta E_{ab}^{*} = [(\Delta L^{*})^{2} + (\Delta a^{*})^{2} + (\Delta b^{*})^{2}]^{\frac{1}{2}}$$

<Table 3>

|  | Whiteness test 1 | Whiteness test 2 | Average | Difference |
|---|---|---|---|---|
| Comparative Example 1 before UV exposure | 89.29 | 89.25 | 89.3 | Standard |
| Comparative Example 1 after UV exposure | 86.93 | 86.95 | 86.9 | 2.7% |
| Comparative Example 2 after UV exposure | 85.73 | 85.76 | 85.7 | 4% |
| Example 1 before UV exposure | 85.58 | 85.54 | 85.6 | Standard |
| Example 1 after UV exposure | 85.59 | 85.65 | 85.6 | 0 |
| Example 2 after UV exposure | 85.79 | 85.8 | 85.8 | 0.02% |

In some embodiments, the white colorant may be uniformly adhered on a carrier resin, in which the carrier resin may be any suitable resin other than a polyvinyl chloride resin. In addition, the white masterbatch may include a suitable additive according to actual design requirements.

In some embodiments, after the fabric of an embodiment of the disclosure is manufactured, the fabric may be subjected to a laminating process, a calendering process, a knife scraping process, a coating process, a bonding process, or a combination thereof to achieve a spray painting effect desired on the inner light cloth of advertisements. However, the disclosure is not limited thereto.

It should be noted that the disclosure is not limited to the aspects described in the above, nor is it limited to the parameters (such as mesh density, light transmittance, thickness, count or other fabric parameters) of the fabric. Any fabric suitable for an inner light cloth of advertisements that is manufactured by a yarn dyeing process and has a whiteness of at least greater than 90% falls within the scope of the disclosure.

To sum up, the fabric of an embodiment of the disclosure includes a yarn woven into the fabric with a whiteness of at least greater than 90%, in which the yarn is composed of fibers made from a white masterbatch. Accordingly, the fabric may achieve a whiteness that enhances the advertising effect while meeting environmental protection requirements. In addition, the carrier resin of an embodiment of the disclosure may not be polyvinyl chloride resin, and the fabric may not have chemical residues. Accordingly, the fabric of an embodiment of the disclosure does not cause environmental problems such as those caused in a rinsing process, a calendering process, or a coating process, and may avoid the need to perform numerous procedures as in the rinsing process or the like. Therefore, the manufacturing process is simplified, and the manufacturing cost is reduced.

**Claims**

1. A fabric suitable for an inner light cloth of advertisements, comprising:
   a yarn, woven into the fabric with a whiteness of at least greater than 90%, wherein the yarn is composed of fibers made from a white masterbatch.

2. The fabric according to claim 1, wherein the white masterbatch comprises a carrier resin and a white colorant.

3. The fabric according to claim 2, wherein the carrier resin is not a polyvinyl chloride resin.

4. A manufacturing method of a fabric suitable for an inner light cloth of advertisements, comprising:

   providing a yarn, wherein the yarn is composed of fibers made from a white masterbatch; and
   carrying out a yarn dyeing process on the yarn to weave the fabric with a whiteness of at least greater than 90%.

5. The manufacturing method of a fabric according to claim 4, wherein the whiteness is not obtained through a rinsing process.

6. The manufacturing method of a fabric according to claim 5, wherein a water saving rate of the manufacturing method of a fabric is at least greater than 50% as compared with the rinsing process.

7. The manufacturing method of a fabric according to claim 6, wherein the water saving rate of the manufacturing method of a fabric is greater than 65% as compared with the rinsing process.

8. The manufacturing method of a fabric according to any one of claims 5 to 7, wherein one or more chemicals are used in the rinsing process.

9. The manufacturing method of a fabric according to any one of claims 4 to 8, wherein the whiteness is not obtained through a calendering process or a coating process.

10. The manufacturing method of a fabric according to any one of claims 4 to 9, wherein producing the fibers comprises:

provide the white masterbatch comprising a carrier resin and a white colorant; and
carrying out a weaving process, a knitting process, a non-knitting process or a tufting process.

**Amended claims in accordance with Rule 137(2) EPC.**

1. A manufacturing method of a fabric suitable for an inner light cloth of advertisements, comprising:

providing a yarn, wherein the yarn is composed of fibers made from a white masterbatch; and
carrying out a yarn dyeing process on the yarn to weave the fabric with a whiteness of at least greater than 90%, wherein the whiteness is measured according to SB/T 10786-2012,
the manufacturing method being **characterized in that** the whiteness is not obtained through a bleach wash process,
a water saving rate of the manufacturing method of a fabric is at least greater than 50% as compared with the bleach wash process.

2. The manufacturing method of a fabric according to claim 1, wherein the water saving rate of the manufacturing method of a fabric is greater than 65% as compared with the bleach wash process.

3. The manufacturing method of a fabric according to claim 1 or 2, wherein one or more chemicals are used in the bleach wash process.

4. The manufacturing method of a fabric according to any one of claims 1 to 3, wherein the whiteness is not obtained through a calendering process or a coating process.

5. The manufacturing method of a fabric according to any one of claims 1 to 4, wherein producing the fibers comprises:

providing the white masterbatch comprising a carrier resin and a white colorant; and
carrying out a weaving process, a knitting process, a non-knitting process or a tufting process.

6. A fabric suitable for an inner light cloth of advertisements obtained from the manufacturing method according to anyone of claims 1 to 5, comprising:

a yarn, woven into the fabric with a whiteness of at least greater than 90%, wherein the yarn is composed of fibers made from a white masterbatch,
wherein the whiteness is measured according to SB/T 10786-2012.

7. The fabric according to claim 6, wherein the white masterbatch comprises a carrier resin and a white colorant.

8. The fabric according to claim 7, wherein the carrier resin is not a polyvinyl chloride resin.

Change in chromatic aberration after UV exposure

(ΔE)

Legend:
- Example 1
- Example 2
- Comparative Example 2
- Comparative Example 1

(Exposure duration): 24 hours, 48 hours, 144 hours, 168 hours

EP 4 202 091 A1

Europäisches
Patentamt
European
Patent Office
Office européen
des brevets

# EUROPEAN SEARCH REPORT

Application Number

EP 22 16 3453

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 227 375 B1 (RHODIA POLIAMIDA E ESPECIALIDADES LTDA [BR]) 6 March 2019 (2019-03-06) | 1-5,9,10 | INV. D01F1/02 D01F1/04 |
| A | * paragraphs [0011], [0022], [0023], [0034], [0044], [0045], [0047], [0048], [0070], [0071], [0072]; claims 1,11 * | 6-8 | D01F1/10 D03D15/20 D03D15/54 D06C27/00 |
| A | ----- CN 110 205 702 A (CHANGZHOU XINGXI GRAPHENE TECH CO LTD) 6 September 2019 (2019-09-06) * the whole document * | 1-10 | |
| A | ----- CN 108 410 140 A (ZHEJIANG ZHONGDI TEXTILE NEW MATERIAL TECH CO LTD) 17 August 2018 (2018-08-17) * the whole document * | 1-10 | |
| A | ----- CN 111 607 839 A (NANTONG QIANGSHENG GRAPHENE TECH CO LTD) 1 September 2020 (2020-09-01) * the whole document * ----- | 1-10 | TECHNICAL FIELDS SEARCHED (IPC) D01F D03D D06C |

The present search report has been drawn up for all claims

| Place of search | Date of completion of the search | Examiner |
|---|---|---|
| The Hague | 23 September 2022 | Van Beurden-Hopkins |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 3453

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2022

| Patent document cited in search report | | Publication date | Patent family member(s) | | Publication date |
|---|---|---|---|---|---|
| EP 3227375 | B1 | 06-03-2019 | BR 112017011526 | A2 | 27-02-2018 |
| | | | CN 107001626 | A | 01-08-2017 |
| | | | EP 3227375 | A1 | 11-10-2017 |
| | | | ES 2720579 | T3 | 23-07-2019 |
| | | | PT 3227375 | T | 28-05-2019 |
| | | | US 2017335087 | A1 | 23-11-2017 |
| | | | WO 2016087887 | A1 | 09-06-2016 |
| | | | WO 2016087913 | A1 | 09-06-2016 |
| CN 110205702 | A | 06-09-2019 | NONE | | |
| CN 108410140 | A | 17-08-2018 | NONE | | |
| CN 111607839 | A | 01-09-2020 | NONE | | |

EPO FORM P0459

For more details about this annex : see Official Journal of the European Patent Office, No. 12/82